# FASCICULE DE BREVET EUROPEEN

(11) **EP 3 732 029 B1**
(45) Date de publication et mention de la délivrance du brevet: **12.02.2025**
(21) Numéro de dépôt: 18826087.1
(22) Date de dépôt: 26.12.2018
(51) Int. Cl.: B29C 65/56, B29C 65/60, B29C 65/62, B29C 65/18, B29L 31/30, F16B 5/04, F16B 17/00

(54) **ASSEMBLAGE DE PIECES EN MATERIAU THERMOPLASTIQUE ET PROCEDE D'ASSEMBLAGE DE TELLES PIECES PAR RIVETAGE THERMOPLASTIQUE**
ZUSAMMENBAU VON TEILEN AUS THERMOPLASTISCHEM MATERIAL UND VERFAHREN ZUR MONTAGE SOLCHER TEILE DURCH THERMOPLASTISCHES NIETEN
ASSEMBLY OF PARTS MADE FROM THERMOPLASTIC MATERIAL AND METHOD FOR ASSEMBLING SUCH PARTS BY MEANS OF THERMOPLASTIC RIVETING

(30) Priorité: 30.12.2017 FR 1763425; 27.01.2018 FR 1850649
(43) Date de publication de la demande: 04.11.2020
(73) Titulaire: Latecoere, 31500 Toulouse, Occitanie (FR)
(72) Inventeur: PERRIER, Christophe, 31200 Toulouse Occitanie (FR); BORLOT, Jean,Michel, 81500 Teulat Occitanie (FR)
(74) Mandataire: Junca, Eric
(86) Numéro de dépôt international: PCT/EP2018/086875
(87) Numéro de publication internationale: WO 2019/129781

(56) Documents cités:
- EP-A1- 0 392 568
- DE-A1- 102004 055 592
- GB-A- 2 135 632
- GB-A- 2 205 374
- JP-A- S5 933 112

## Description

### DOMAINE TECHNIQUE

L'invention se rapporte à un assemblage de pièces composites à matrice thermoplastique, et à un procédé d'assemblage de telles pièces par rivetage thermoplastique. Elle concerne plus particulièrement l'assemblage de pièces à matrice thermoplastique à haute performance mécanique (résistance, déformation, etc.), utilisées notamment, mais non exclusivement, en aéronautique.

Dans le domaine de l'aéronautique, un rivetage destiné à assembler des pièces doit réaliser une jointure sans défaut, en particulier sans risque d'ouverture par cisaillement. Dans ce domaine, diverses méthodes d'assemblage sont utilisées pour des pièces en métal ou en matériau composite. Classiquement, les pièces métalliques sont généralement jointées par vis et écrous. Par exemple, le brevet de document FR 2 622 257 décrit un tel rivetage métallique de grands panneaux avec pré-perçage et pré-rivetage à intervalles réguliers.

Concernant l'assemblage de matériaux composites, plusieurs autres techniques sont également développées: par renforcement des panneaux à souder et utilisation de fixation métalliques, éventuellement après une étape de collage; par jointage de type « couture » avec un fil présentant une haute résistance à la traction (à base de « kevlar », de fibres de verre ou de carbone, etc.) et un type d'aiguille adapté. Dans le document de brevet DE 102004055592 les composants en matériau composite sont préchauffés avant d'être cousus avec des fils sélectionnés en fonction du matériau des composants, la zone chauffée étant ensuite comprimée pour maintenir l'épaisseur de l'ensemble des composants.

Ces techniques connues sont d'ordinaire dénommées en terminologie anglaise : stitching (couture), tufting (piquage), lock stitching (point noué), ou Z-pinning (épinglage). Avantageusement, la couture peut être renforcée par une injection de résine, après la réalisation du jointage. Mais ces techniques sont difficilement applicables aux matériaux thermoplastiques, qui présentent une rigidité importante à température ambiante.

### ÉTAT DE LA TECHNIQUE

Sur les portes passagers des avions commerciaux basés sur une architecture structure raidie / panneau pressurisé, l'interface entre les semelles de la structure raidie et le panneau assure la tenue à l'arrachement induit par le chargement en pressurisation du panneau. La non-propagation de défaut (tel qu'un délaminage résultant d'un dommage d'impact peu visible en abrégé « BVID ») pouvant apparaitre au sein du matériau composite constitutif de l'architecture.

Des solutions ont permis d'améliorer l'assemblage de pièces en matériau composite thermodurcissable, mais ces solutions ne s'adaptent pas au cas de pièces en matériau composite thermoplastique. Une méthode d'assemblage de pièces thermoplastiques dite T.A.P. (acronyme de « Thermally Assisted Pinning » en terminologie anglaise), préconise de chauffer des aiguilles au-dessus de la température de fusion de la résine puis de percer les deux pièces thermoplastiques à assembler. L'extrémité de l'aiguille qui dépasse de l'autre côté des deux pièces thermoplastiques est ensuite coupée, la portion d'aiguille restant dans l'épaisseur du matériau servant au jointage des deux pièces. Cette méthode présente l'inconvénient de favoriser le contact résine-métal qui présente une mauvaise tenue à l'arrachement, ce qui est un point particulièrement critique dans les domaines où les pièces subissent des contraintes mécaniques élevées, en particulier dans le domaine aéronautique ou spatial.

Une autre solution, présentée dans le document de brevet US 5 186 776, préconise une méthode de rivetage d'un matériau composite par des broches métalliques insérées dans le matériau composite chauffé et soumis à des vibrations de type ultrasons, cette broche étant de préférence insérée avec un outil cylindrique entourant la broche. Mais l'utilisation d'ultrasons n'est adaptée qu'à des broches métalliques et présente également l'inconvénient du contact résine-métal.

Une autre solution, développées dans les documents de brevet GB 2 205 374 ou EP 0 392 568, consiste à orienter les fibres de renfort dans un rivet en matériau thermoplastique à haute température et à procéder à l'assemblage de pièces par un traitement thermique approprié. Cette solution ne permet pas de garantir une haute tenue à l'arrachement.

### EXPOSÉ DE L'INVENTION

L'invention vise à s'affranchir de ces inconvénients et pour ce faire, l'invention prévoit d'utiliser une jonction de rivetage en matériau plastique compatible avec des pièces composites à matrice thermoplastique tout en présentant des caractéristiques de haute résistance mécanique, en particulier de tenue à l'arrachement.

Plus précisément la présente invention a pour objet un assemblage de pièces composites à matrice thermoplastique. Un tel assemblage comporte une pluralité de points de rivetage réalisée par couture de liens d'assemblage en matériau compatible avec le matériau des pièces, ces liens étant noyés dans lesdites zones et les traversant de part en part, le long de zones des pièces se recouvrant par superposition de deux faces de ces zones disposées en regard. Chaque zone présente une autre face opposée qui reste apparente avec la pièce. Dans ce système d'assemblage, les liens d'assemblage sont en matériau composite à base de résine thermoplastique. Et ces liens sont constitués au moins en partie par un point de couture en piqué (ou tufting) réalisé à partir de fil formé de fibre aramide enrobée de résine.

Le terme « pièce » est générique et désigne aussi bien un panneau, un carénage, une peau, une poutre, un cadre, une lisse, une traverse, un voile, un support ou tout autre élément à assembler.

Selon des modes de réalisation préférés :
- le lien d'assemblage est constitué d'une matière composite choisie entre une résine renforcée en fibres continues, une résine renforcée en fibres de longueurs découpées, en particulier courtes ou longues en fonction du matériau composite des pièces assemblées et/ou de l'épaisseur de ces pièces, la résine étant avantageusement sectionnée sur place après insertion, et des nanotubes de carbone;
- le lien d'assemblage se présente sous une forme choisie entre un toron, une agrafe couplant deux torons adjacents par une résine en fibres continues, un insert et une combinaison de toron, d'agrafe et/ou de point de couture, au moins un point de couture en piqué étant dans ce lien d'assemblage; avantageusement, ces différents types de liens coexistent dans un même assemblage de pièces ;
- les pièces sont constituées en stratifiés à hautes performances physiques de niveau aéronautique ou spatial, en particulier à matrice thermoplastique à base de PPS (polysulfure de phénylène), PEEK (polyétheréthercétone), PEKK (polyéthercétonecétone), PEI (polyétherimide), PAI (polyamide imide), ou PI (polyimide) en fonction de l'excellence des qualités à prioriser (résistance à la compression, aux chocs, aux agents chimiques, à la température, etc.), avantageusement renforcée par des fibres de verre, de bore, de carbone ou tout autre matériau à fibres de renfort tissé ou non tissé;
- les zones des pièces à assembler peuvent se situer dans toute partie de ces pièces, aussi bien en bordure que dans des parties internes et centrales, et indépendamment de l'une ou l'autre pièce.

L'invention se rapporte également à un procédé d'assemblage de pièces par rivetage thermoplastique à l'aide de panneaux de chauffe percés transversalement, ce procédé se déroulant selon les étapes suivantes :
- recouvrement des pièces par superposition de deux faces de deux zones en regard, chaque pièce présentant une autre face opposée qui reste apparente;
- mise en place sur chaque face de zone apparente d'un panneau de chauffe percé de sorte que les perçages sont positionnés en regard;
- chauffage des zones des pièces à partir de leurs faces opposées par les panneaux de chauffe jusqu'à une température de pénétration d'une pointe de perçage pour amorcer la fusion des zones des faces superposées, les zones pouvant représenter la totalité des pièces;
- insertion d'au moins une pointe de perçage au travers d'un premier panneau de chauffe, avec percement successif de la première et de la deuxième pièce de sorte à créer au moins un alésage cylindrique;
- retrait de la pointe de perçage, ce retrait pouvant être effectué par continuité de déplacement dans le même sens (« marche avant ») ou dans le sens contraire (« marche arrière ») ;
- insertion d'un lien d'assemblage en matériau composite à base de résine thermoplastique dans chaque alésage cylindrique jusqu'à la face apparente de la deuxième pièce, ce lien étant constitué au moins en partie par un point de couture formé en piqué réalisé à partir de fibre aramide enrobée de résine a;
- retrait des panneaux de chauffe percés et installation à leur place d'un outillage de consolidation par chauffage sous pression, pour fusionner la matière constituante du lien d'assemblage avec celle des pièces, puis refroidissement.

Selon des modes de mise en œuvre préférés:
- le lien d'assemblage en matériau thermoplastique est un élément de renfort qui présente une forme complémentaire de l'alésage cylindrique;
- dans ce cas, une coupe du lien d'assemblage dépassant de la face apparente de la première pièce est effectuée après le retrait du premier panneau de chauffe et avant l'installation de l'outillage de consolidation;
- le lien d'assemblage en matériau thermoplastique est la formation d'un point de couture entre deux fils par le passage d'une aiguille de couture dans l'alésage cylindrique.

Selon des modes de mise en œuvre particulièrement avantageux, le procédé selon l'invention peut prévoir de:
- automatiser des étapes d'assemblage simultané de plusieurs pièces à assembler, en particulier une grille de perçage des pièces peut être utilisée pour un perçage simultané des pièces par les pointes de perçage ;
- dans le cas où le lien d'assemblage est un élément de renfort, d'entraîner cet élément à la suite de la pointe de perçage qui sort du matériau thermoplastique en se déplaçant dans le sens de son introduction;
- générer une tête fraisée sur la première zone à partir de la géométrie correspondante de I pointe de perçage, la tête fraisée étant prolongée par le perçage afin de faciliter l'insertion du lien d'assemblage, l'élément de renfort ou le point de couture, et
- aménager un creux de bouterollage dans le deuxième panneau de chauffe mis en place contre la face apparente de la deuxième pièce, afin d'ancrer l'élément de renfort sur cette face en formant un bourrelet après compression et chauffage.

L'assemblage par rivetage thermoplastique est renforcé par la géométrie des alésages cylindriques: diamètre, distance entre les lignes d'alésage, distance entre les alésages d'une même ligne. Cet assemblage est également renforcé par les caractéristiques des torons ou des pattes des agrafes: nature de la résine du matériau, identique ou physico/chimiquement compatible avec le matériau des pièces à assembler; typologie des fibres continues ou adaptées en longueur, et leur charge métallique suffisante pour permettre une continuité électrique. Les matériaux mis en œuvre pour les pièces d'assemblage sont de même nature, soit semblables soit au moins physico/chimiquement compatibles.

Ce procédé peut s'appliquer en particulier au renforcement d'assemblage de pièces déjà solidarisées par soudage, induction, collage ou tout moyen équivalent, lors de la construction, en maintenance ou en réparation.

L'invention a également pour objet un équipement à haute résistance mécanique, tel qu'une structure d'aéronef ou de satellite (en particulier: porte d'avion, caissons (de mât, de voilure, de case de train, de dérive, etc.), fuselage, aile ou cellule d'aéronefs et de satellites, panneaux, etc.) comportant une architecture à structure raidie et panneau pressurisé en matériau composite, dans laquelle des structures et panneaux sont assemblés selon l'assemblage de pièces défini précédemment, en particulier par mise en œuvre du procédé décrit ci-dessus.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue d'un exemple de réalisation d'étapes du procédé d'assemblage par rivetage thermoplastique de deux pièces en matériau thermoplastique ;
- la figure 2, une variante du procédé de la figure 1 utilisant un point de couture ;
- la figure 3, une vue d'un rivetage selon un exemple de réalisation de l'invention utilisant une agrafe ; et
- la figure 4, une variante du procédé de la figure 1 utilisant un alésage cylindrique pour toron avec une tête fraisée et une extrémité bombée au moyen d'un outillage de bouterolle.

Sur les figures du présent texte, des éléments identiques ou analogues sont repérés par un même signe de référence qui renvoie au(x) passage(s) de la description qui le mentionne(nt).

### DESCRIPTION DÉTAILLÉE

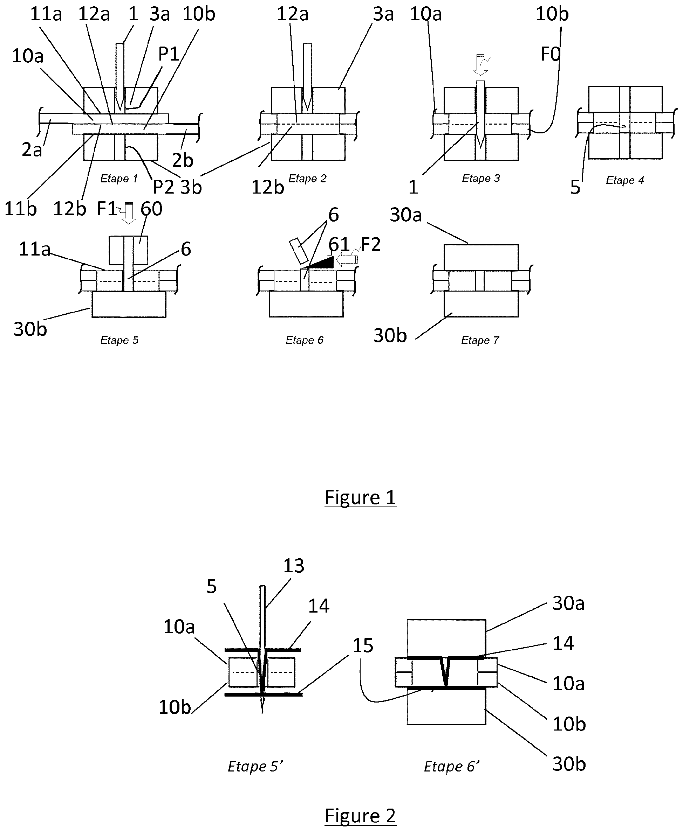

La figure 1 présente un exemple en sept étapes principales du procédé d'assemblage selon l'invention par rivetage thermoplastique de deux pièces 2a, 2b d'architecture de porte d'avion en matériau thermoplastique. Dans cet exemple, les pièces 2a, 2b sont assemblées par leurs zones d'extrémité délimitées par leurs bords 10a et 10b, mais le procédé peut s'appliquer à l'assemblage de pièces dans des zones situées au centre de ces pièces. Le matériau thermoplastique est ici du PEEK (polyéther-éther-cétone de phénylène). Ce rivetage comporte l'utilisation d'une pointe de perçage 1, deux panneaux de chauffe percés 3a et 3b pour le passage de la pointe de perçage 1, ainsi que de deux panneaux de chauffe non percés 30a et 30b.

Ce procédé se déroule selon les étapes suivantes :
- étape 1 : superposition des bords 10a et 10b des pièces 2a, 2b en matériau thermoplastique, ces bords 10a, 10b présentant alors chacun: une face de bord apparente 11a, 11b, et une face de bord centrale 12a, 12b non apparente accolée à l'autre face de bord centrale 12b, 12a; et mise en place sur chaque face de bord apparente 11a, 11b d'un panneau de chauffe percé 3a, et 3b; les perçages P2 et P3 sont - dans l'exemple - perpendiculaires aux faces de bord 11a, 11b et 12, 12b, mais peuvent être inclinés par rapport à ces faces, en particulier dans la fourchette d'orientation comprise entre 30 à 90°;
- étape 2 : chauffage par les panneaux de chauffe percés 3a et 3b, des bords 10a et 10b des deux pièces en matériau thermoplastique 2a, 2b, ce chauffage étant réalisé à une température de quelques degrés supérieure au point de fusion du matériau thermoplastique; la fusion entre les faces centrales non apparentes12a et 12b étant ainsi progressivement amorcée;
- étapes 3 et 4 : insertion d'une pointe de perçage 1 (flèche F0) au travers des panneaux de chauffe percés 3a et 3b, avec percement quasi-simultané d'un premier bord 10a puis d'un deuxième bord 10b des deux pièces en PEEK afin de réaliser un alésage cylindrique 5 à base circulaire dans l'exemple; puis la pointe de perçage 1 est retirée soit en se déplaçant dans le même sens qu'à son introduction (en " marche avant ") comme dans l'exemple, soit en se déplaçant dans le sens contraire (en " marche arrière ") ;
- étape 5 : remplacement d'un des panneaux de chauffe percé (le premier panneau 3b dans cet exemple de réalisation), par un panneau de chauffe non percé 30b, afin de permettre une chauffe homogène des deux bords 10a et 10b; puis remplacement du deuxième panneau de chauffe percé 3a, découvrant ainsi la face de bord apparente 11a; un toron 6 en matériau composite à matrice thermoplastique, en PEEK dans l'exemple, est alors inséré dans l'alésage cylindrique 5 au moyen d'un outil 60 (flèche F1);
- étape 6 : le toron 6 est coupé sur place à la bonne hauteur - c'est-à-dire dépassant à peine de la face de bord 11a - au moyen d'un outil 61 (flèche F2) ;
- étape 7 : un panneau de chauffe non percé 30a est placé sur la face découverte 11a, recouvrant également le toron 6 coupé ; puis les deux panneaux de chauffe non percés compriment et chauffent les deux bords 10a et 10b des pièces en matériau thermoplastique; ainsi, ce chauffage permet de fusionner les deux faces centrales non apparentes 12a et 12b ainsi que, avantageusement, de la matière stratifiée de renforcement à haute performance mécanique (en PEEK et fibres de carbone dans l'exemple) des pièces d'assemblage avec celle des deux bords 10a et 10b.

La figure 2 présente une variante du procédé de la figure 1 concernant l'utilisation d'un point de couture, réalisé au moyen de deux fils 14 et 15. Ces fils sont en fibres enrobées de résine thermoplastique, les fibres étant en aramide de type « kevlar » dans l'exemple, qui présentent une haute résistance à la traction. Alternativement, la fibre de « kevlar » peut être remplacée par des fibres de carbone ou de verre. Les étapes 1 à 4 de la figure 1 sont identiques à celles du procédé utilisant un toron. Puis, pour l'utilisation d'un point de piquage (ou « stitching » en terminologie anglaise), on insère, dans l'alésage cylindrique 5, une aiguille de couture 13 du côté du bord 10a (étape 5'). L'aiguille de couture 13 porte le fil 14, et ce fil 14 vient se nouer avec l'autre fil 15 qui longe le bord 10b (étape 6'). D'autres types de points de couture sont également utilisables (point noué, etc.).

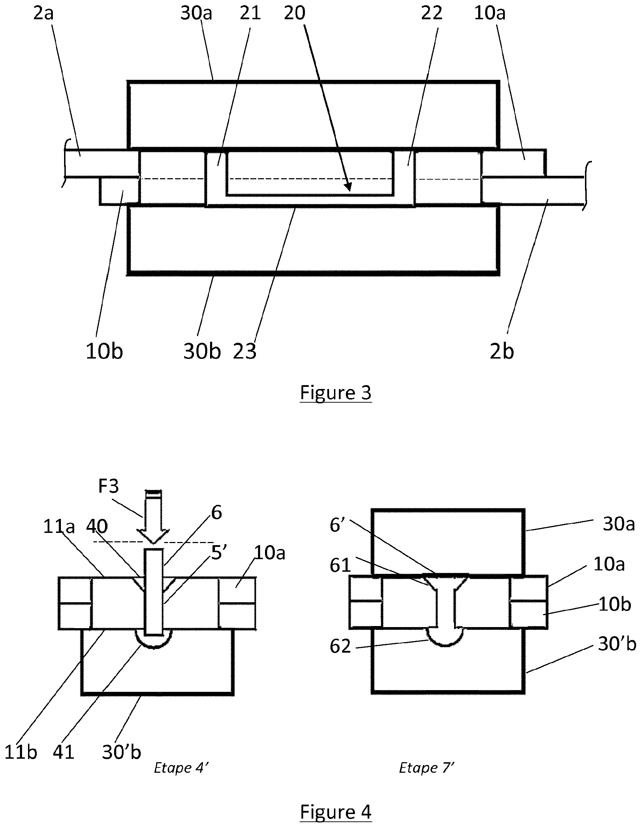

La figure 3 illustre un exemple d'utilisation d'une agrafe 20, dans le cadre du procédé d'assemblage par rivetage thermoplastique des deux bords 10a et 10b des pièces en matériau thermoplastique. Une agrafe 20, en matériau thermoplastique à fibres continues, est insérée simultanément dans deux alésages adjacents 5 (cf. figure 1, étape 4) de rivetage thermoplastique selon l'invention, au moyen de ses deux pattes 21 et 22. La partie de jonction centrale 23 de l'agrafe 20 est aplatie au cours du chauffage contre le bord 10b par les panneaux de chauffe 30a et 30b.

Les vues schématiques de la figure 4 présentent une variante des dernières étapes du procédé de la figure 1, utilisant un alésage cylindrique particulier 5' pour insérer (flèche F3) le toron 6. Cet alésage 5' est réalisée par une pointe de perçage (cf. figure 1) dont la géométrie est adaptée par une forme d'extrémité conique afin de créer une tête fraisée d'entrée évasée correspondante 40 (étape 4'). Grâce à cette entrée évasée 40, l'insertion du toron 6 est facilitée et son encrage renforcé, comme décrit ci-dessous. Après insertion, le toron 6 est découpé de sorte à laisser une portion d'extrémité en excès surplombant la face 11a. Un « bombage » de son autre extrémité est réalisé au moyen d'un outillage de bouterolle qui forme un creux de bouterollage 41 dans le panneau de chauffe 30'b (étape 4'). Par compression et chauffage à l'aide des panneaux 30a et 30'b, l'autre extrémité du toron 6 est bombée en forme de bourrelet demi-sphérique 62 (étape 7'). L'entrée évasée 40 et le creux de bouterollage 41 permettent ainsi un ancrage optimisé du toron 6, la matière en excès occupant l'espace libre des creux 40 et 41, créant ainsi des extrémités élargies au toron 6.

L'invention n'est pas limitée aux exemples de réalisation décrits et représentés. Ainsi, dans le système de chauffage, la partie chauffante peut être la pointe de perçage au lieu des panneaux de chauffe. Ou encore, des panneaux de chauffe non percés peuvent compléter les panneaux de chauffe percés an cours des étapes du procédé.

Les alésages cylindriques réalisés dans les panneaux de chauffe peuvent être à base circulaire, polygonale ou oblongue.

Les entrée évasées des alésages peuvent également être réalisées par tout moyen d'usinage: fraisage, détourage, tournage, etc.

Par ailleurs, le lien d'assemblage peut être est constitué d'une matière composite à base de résine thermoplastique renforcée par tout élément de charge connu et adapté.

## Revendications

1. Assemblage de pièces composites (2a, 2b) à matrice thermoplastique, comportant une pluralité de points de rivetage réalisée par des liens d'assemblage (6 ; 14, 15 ; 20) en matériau compatible avec le matériau des pièces, ces liens étant noyés dans des zones (10a, 10b) et les traversant de part en part le long desdites zones des pièces se recouvrant par superposition de deux faces (12a, 12b) de ces zones (10a, 10b) disposés en regard, chaque zone (10a, 10b) présentant une autre face opposée (11a, 11b) qui reste apparente avec la pièce (2a, 2b), **caractérisé en ce que** les liens d'assemblage (6 ; 14, 15 ; 20) sont en matériau composite à base de résine thermoplastique, et **en ce que** ces liens (6 ; 14, 15 ; 20) sont constitués au moins en partie par un point de couture en piqué réalisé à partir de fil en fibre aramide enrobée de résine traversant de part en part les zones (10a, 10b) avec une orientation comprise entre 30° et 90° par rapport à leurs faces (11a, 11B, 12a, 12b).

2. Assemblage selon la revendication 1, dans lequel le lien d'assemblage (6 ; 14, 15 ; 20) est constitué d'une matière composite choisie entre une résine renforcée en fibres continues, une résines renforcée en fibres de longueurs découpées, et des nanotubes de carbone.

3. Assemblage selon la revendication 1 ou 2 dans lequel le lien d'assemblage (6 ; 14, 15 ; 20) se présente sous une forme choisie entre un toron (6), une agrafe (20) couplant deux torons adjacents par une résine en fibres continues, un insert et une combinaison de toron, d'agrafe et/ou de point de couture, au moins un point de couture en piqué (14, 15) étant dans ce lien d'assemblage.

4. Assemblage selon l'une quelconque des revendications précédentes, dans lequel les pièces (2a, 2b) sont constituées entre stratifiés à base de PPS (polysulfure de phénylène), PEEK (polyétheréthercétone), PEKK polyéthercétonecétone), PEI (polyétherimide), PAI (polyamide imide) et PI (polyimide).

5. Procédé d'assemblage de pièces (2a, 2b) composites à matrice thermoplastique selon l'une quelconque des revendications précédentes par rivetage thermoplastique, ce procédé se déroulant selon les étapes suivantes :
- recouvrement des pièces (2a, 2b) par superposition de deux faces (12a, 12b) de zones en regard (10a, 10b), chaque pièce (2a, 2b) présentant une autre face opposée (11a, 11b) qui reste apparente avec la pièce (2a, 2b);
- mise en place sur chaque face de zone apparente (11a, 11b) d'un panneau de chauffe percé (3a, 3b) de sorte que les perçages sont positionnés en regard;
- chauffage des zones (10a, 10b) des pièces (2a, 2b) à partir de leurs faces opposées (11a, 11b) par des panneaux de chauffe (3a, 3b) percés transversalement jusqu'à une température inférieure au point de fusion du matériau à matrice thermoplastique des pièces pour amorcer la fusion des zones (10a, 10b) des faces superposées (12a, 12b);
- insertion d'au moins une pointe de perçage (1) au travers d'un premier panneau de chauffe (3a), avec percement successif de la première (2a) et de la deuxième (2b) pièce de sorte à créer au moins un alésage cylindrique (5 ; 5');
- retrait de la pointe de perçage (1), ce retrait pouvant être effectué par continuité de déplacement dans le même sens (« marche avant ») ou dans le sens contraire (« marche arrière ») ;
- insertion d'un lien d'assemblage (6 ; 14, 15 ; 20) en matériau composite à base de résine thermoplastique dans chaque alésage cylindrique (5, 5') jusqu'à la face apparente (12b) de la deuxième pièce (10b), ce lien étant constitué au moins en partie par un point de couture formé en piqué (14, 15) réalisé à partir de fibre aramide enrobée de résine;
- retrait des panneaux de chauffe percés (3a, 3b) et installation à leur place d'un outillage de consolidation par chauffage sous pression (30a, 30b), pour fusionner la matière constituante du lien d'assemblage (6 ; 14, 15 ; 20) avec celle des pièces (2a, 2b), puis refroidissement.

6. Procédé d'assemblage selon la revendication précédente, dans lequel le lien d'assemblage (6) en matériau thermoplastique est un élément de renfort qui présente une forme complémentaire de l'alésage cylindrique (5 ; 5').

7. Procédé d'assemblage selon la revendication précédente, dans lequel une coupe du lien d'assemblage (6, 20) dépassant de la face apparente (12a) de la première pièce (10a) est effectuée après le retrait du premier panneau de chauffe (3a, 3b) et avant l'installation de l'outillage de consolidation (30a, 30b).

8. Procédé d'assemblage selon l'une quelconque des revendications 6 ou 7, dans lequel dans le cas où le lien d'assemblage (6, 6') est un élément de renfort, cet élément est entraîné à la suite de la pointe de perçage (1) qui sort du matériau thermoplastique (10a, 10b) en se déplaçant dans le sens de son introduction.

9. Procédé d'assemblage selon la revendication 5, dans lequel le lien d'assemblage en matériau thermoplastique est la formation d'un point de couture (14, 15) entre deux fils par le passage d'une aiguille de couture (13) dans l'alésage cylindrique (5).

10. Procédé d'assemblage selon l'une quelconque des revendications 5 à 9, dans lequel il est prévu d'automatiser des étapes d'assemblage simultané de plusieurs pièces à assembler.

11. Procédé d'assemblage selon la revendication précédente, dans lequel une grille de perçage des pièces (2a, 2b) est utilisée pour un perçage simultané des pièces (2a, 2b) par les pointes de perçage (1).

12. Procédé d'assemblage selon l'une quelconque des revendications 5 à 11, dans lequel il est prévu de générer une tête fraisée (40) à partir de la géométrie correspondante de la pointe de perçage, la tête fraisée (40) étant prolongée par le perçage (5').

13. Procédé d'assemblage selon l'une quelconque des revendications 5 à 12, dans lequel un creux de bouterollage (41) est aménagé dans le deuxième panneau de chauffe (30'b) mis en place contre la face apparente (11b) de la deuxième pièce (2b), afin d'ancrer l'élément de renfort (6) sur cette face (11b) en formant un bourrelet (62) par compression et chauffage.

14. Equipement à haute résistance mécanique comportant une architecture à structure raidie et panneau pressurisé en matériau composite, **caractérisé en ce que** des structures et panneaux (2a, 2b) sont assemblés conformément à l'assemblage de pièces selon l'une quelconque des revendications 1 à 4, par mise en œuvre du procédé selon l'une quelconque des revendications 5 à 13.

## Patentansprüche

1. Zusammenbau von Verbundteilen (2a, 2b) mit thermoplastischer Matrix, aufweisend eine Mehrzahl von Nietpunkten, die durch Verbindungsglieder (6; 14, 15; 20) aus einem Material hergestellt ist, das mit dem Material der Teile kompatibel ist, wobei diese Glieder in Bereiche (10a, 10b) eingebettet sind und sie von einer Seite zur anderen entlang der Bereiche der Teile durchqueren, die sich durch Überlagerung zweier Flächen (12a, 12b) dieser Bereiche (10a, 10b) überdecken, die einander gegenüberliegend angeordnet sind, wobei jeder Bereich (10a, 10b) eine andere gegenüberliegende Fläche (11a, 11b) aufweist, die mit dem Teil (2a, 2b) sichtbar bleibt, **dadurch gekennzeichnet, dass** die Verbindungsglieder (6; 14, 15; 20) aus Verbundmaterial auf Basis von thermoplastischem Harz sind, und dadurch, dass diese Glieder (6; 14, 15; 20) wenigstens teilweise von einem Steppstich gebildet sind, der aus einem harzummantelten Faden aus Aramidfaser hergestellt ist, der die Bereiche (10a, 10b) von einer Seite zur anderen mit einer Orientierung zwischen 30° und 90° bezogen auf ihre Flächen (11a, 11B, 12a, 12b) durchquert.

2. Zusammenbau nach Anspruch 1, wobei das Verbindungsglied (6; 14, 15; 20) von einem Verbundmaterial gebildet ist, das aus einem mit durchgehenden Fasern verstärkten Harz, einem mit Fasern in geschnittenen Längen verstärkten Harz und Kohlenstoff-Nanoröhren ausgewählt ist.

3. Zusammenbau nach Anspruch 1 oder 2, wobei das Verbindungsglied (6; 14, 15; 20) in einer Form vorliegt, die aus einem Strang (6), einer Klammer (20), die zwei benachbarte Stränge durch ein Harz mit durchgehenden Fasern koppelt, einem Einsatz und einer Kombination aus Strang, Klammer und/oder Nähstich, wobei sich mindestens ein Steppstich (14, 15) in diesem Verbindungsglied befindet, gewählt ist.

4. Zusammenbau nach einem der vorhergehenden Ansprüche, wobei die Teile (2a, 2b) zwischen Schichtstoffen auf Basis von PPS (Polyphenylensulfid), PEEK (Polyetheretherketon), PEKK (Polyetherketonketon), PEI (Polyetherimid), PAI (Polyamid-Imid) und PI (Polyimid) gebildet sind.

5. Verfahren zum Zusammenbau von Verbundteilen (2a, 2b) mit thermoplastischer Matrix nach einem der vorhergehenden Ansprüche durch thermoplastisches Nieten, wobei dieses Verfahren gemäß den folgenden Schritten abläuft:
- Überdecken der Teile (2a, 2b) durch Überlagerung zweier Flächen (12a, 12b) von einander gegenüberliegenden Bereichen (10a, 10b), wobei jedes Teil (2a, 2b) eine andere gegenüberliegende Fläche (11a, 11b) aufweist, die mit dem Teil (2a, 2b) sichtbar bleibt;
- Auflegen einer durchbohrten Heizplatte (3a, 3b) auf jede sichtbare Bereichsfläche (11a, 11b), so dass die Löcher einander gegenüberliegend positioniert sind;
- Erhitzen der Bereiche (10a, 10b) der Teile (2a, 2b) ausgehend von ihren gegenüberliegenden Flächen (11a, 11b) durch Heizplatten (3a, 3b), die in Querrichtung durchbohrt sind, bis auf eine Temperatur unterhalb des Schmelzpunkts des Materials mit thermoplastischer Matrix der Teile, um das Schmelzen der Bereiche (10a, 10b) der überlagerten Flächen (12a, 12b) in Gang zu setzen;
- Einfügen wenigstens einer Durchbohrungsspitze (1) durch eine erste Heizplatte (3a) hindurch, mit aufeinanderfolgender Durchbohrung des ersten (2a) und des zweiten (2b) Teils, um wenigstens eine zylinderförmige Bohrung (5; 5') zu erzeugen;
- Entfernen der Durchbohrungsspitze (1), wobei dieses Entfernen durch fortgesetzte Bewegung in derselben Richtung ("Vorwärtsgang") oder in der entgegengesetzten Richtung ("Rückwärtsgang") vorgenommen werden kann;
- Einfügen eines Verbindungsglieds (6; 14, 15; 20) aus Verbundmaterial auf Basis von thermoplastischem Harz in jede zylinderförmige Bohrung (5, 5') bis zur sichtbaren Fläche (12b) des zweiten Teils (10b), wobei dieses Glied wenigstens teilweise von einem Steppstich (14, 15) gebildet ist, der aus harzummantelter Aramidfaser hergestellt ist;
- Entfernen der durchbohrten Heizplatten (3a, 3b) und Installieren eines Werkzeugs zur Verfestigung durch Erhitzen unter Druck (30a, 30b) an deren Stelle, um das Material, das das Verbindungsglied (6; 14, 15; 20) bildet, mit dem der Teile (2a, 2b) zu verschmelzen, dann Kühlen.

6. Zusammenbauverfahren nach dem vorhergehenden Anspruch, wobei das Verbindungsglied (6) aus thermoplastischem Material ein Verstärkungselement ist, das eine Form aufweist, die zur zylinderförmigen Bohrung (5, 5') komplementär ist.

7. Zusammenbauverfahren nach dem vorhergehenden Anspruch, wobei eine Durchtrennung des Verbindungsglieds (6, 20), das von der sichtbaren Fläche (12a) des ersten Teils (10a) absteht, nach dem Entfernen der ersten Heizplatte (3a, 3b) und vor der Installation des Verfestigungswerkzeugs (30a, 30b) vorgenommen wird.

8. Zusammenbauverfahren nach einem der Ansprüche 6 oder 7, wobei in dem Fall, dass das Verbindungsglied (6, 6') ein Verstärkungselement ist, dieses Element hinter der Durchbohrungsspitze (1) hergezogen wird, die aus dem thermoplastischen Material (10a, 10b) austritt, sich dabei in Richtung ihrer Einführung bewegt.

9. Zusammenbauverfahren nach Anspruch 5, wobei das Verbindungsglied aus thermoplastischem Material die Bildung eines Nähstichs (14, 15) zwischen zwei Fäden durch das Einstecken einer Nähnadel (13) in die zylinderförmige Bohrung (5) ist.

10. Zusammenbauverfahren nach einem der Ansprüche 5 bis 9, wobei vorgesehen ist, Schritte gleichzeitigen Zusammenbaus mehrerer zusammenzubauender Teile zu automatisieren.

11. Zusammenbauverfahren nach dem vorhergehenden Anspruch, wobei ein Bohrraster der Teile (2a, 2b) für eine gleichzeitige Durchbohrung der Teile (2a, 2b) durch die Durchbohrungsspitzen (1) verwendet wird.

12. Zusammenbauverfahren nach einem der Ansprüche 5 bis 11, wobei vorgesehen ist, einen Senkkopf (40) anhand der entsprechenden Geometrie der Durchbohrungsspitze zu erzeugen, wobei der Senkkopf (40) durch die Bohrung (5') verlängert wird.

13. Zusammenbauverfahren nach einem der Ansprüche 5 bis 12, wobei ein Stauchungshohlraum (41) in der zweiten Heizplatte (30'b) eingerichtet ist, die gegen die sichtbare Fläche (11b) des zweiten Teils (2b) angelegt wird, um das Verstärkungselement (6) auf dieser Seite (11b) zu verankern, indem durch Kompression und Erhitzen ein Wulst (62) gebildet wird.

14. Ausrüstung mit hoher mechanischer Festigkeit aufweisend eine Architektur mit versteifter Struktur und Druckplatte aus Verbundmaterial, **dadurch gekennzeichnet, dass** Strukturen und Platten (2a, 2b) entsprechend dem Zusammenbau von Teilen nach einem der Ansprüche 1 bis 4 durch Umsetzung des Verfahrens nach einem der Ansprüche 5 bis 13 zusammengebaut sind.

## Claims

1. An assembly of composite parts (2a, 2b) with a thermoplastic matrix, comprising a plurality of riveting points formed by assembly links (6; 14, 15 ; 20) made of a material compatible with the material of the parts, these ties being embedded in zones (10a, 10b) and passing right through them along the said zones of the parts overlapping by superimposing two faces (12a, 12b) of these zones (10a, 10b) arranged opposite each other, each zone (10a, 10b) having another opposite face (11a, 11b) which remains visible with the part (2a, 2b), wherein the assembly ties (6 ; 14, 15; 20) are made of a composite material based on thermoplastic resin, and in that these links (6; 14, 15; 20) are constituted at least in part by a stitched seam made from aramid fiber thread coated with resin passing right through the zones (10a, 10b) with an orientation of between 30° and 90° relative to their faces (11a, 11B, 12a, 12b).

2. The assembly as claimed in claim 1, wherein the assembly tie (6; 14, 15; 20) is made of a composite material selected from continuous fiber-reinforced resin, chopped-length fiber-reinforced resin and carbon nanotubes.

3. The assembly as claimed in claim 1 or 2 wherein the assembly tie (6; 14, 15; 20) is in a form selected from a strand (6), a staple (20) coupling two adjacent strands by a continuous fiber resin, an insert and a combination of strand, staple and/or stitch, at least one stitch of backstitch (14, 15) being in this assembly tie.

4. The assembly as claimed in any one of the preceding claims, wherein the parts (2a, 2b) consist of laminates based on PPS (polyphenylene sulfide), PEEK (polyetheretherketone), PEK (polyetherketoneketone), PEI (polyetherimide), PAI (polyamide imide) and PI (polyimide).

5. An assembly method for thermoplastic matrix composite parts (2a, 2b) according to any of the preceding claims by thermoplastic riveting, this method being carried out according to the following steps:
- overlapping the parts (2a, 2b) by superimposing two faces (12a, 12b) of facing regions (10a, 10b), each part (2a, 2b) having another opposite face (11a, 11b) which remains visible with the part (2a, 2b);
- placing a perforated heating panel (3a, 3b) on each exposed zone face (11a, 11b) so that the perforations are positioned opposite each other;
- heating the zones (10a, 10b) of the parts (2a, 2b) from their opposite faces (11a, 11b) by transversely drilled heating panels (3a, 3b) to a temperature below the melting point of the thermoplastic matrix material of the parts to initiate melting of the zones (10a, 10b) of the superimposed faces (12a, 12b);
- insertion of at least one piercing tip (1) through a first heating panel (3a), with successive piercing of the first (2a) and second (2b) parts so as to create at least one cylindrical bore (5; 5');
- removal of the drilling tip (1), which can be carried out by continuous movement in the same direction ("forward motion") or in the opposite direction ("reverse motion") ;
- insertion of an assembly link (6; 14, 15; 20) made of composite material based on thermoplastic resin into each cylindrical bore (5, 5') up to the visible face (12b) of the second part (10b), this link being constituted at least in part by a stitch formed into a quilt (14, 15) made from aramid fiber coated with resin;
- removal of the perforated heating panels (3a, 3b) and installation in their place of a pressurized heating consolidation tool (30a, 30b), to fuse the material making up the assembly link (6; 14, 15; 20) with that of the parts (2a, 2b), then cooling.

6. The assembly method as claimed in the preceding claim, in which the assembly bond (6) of thermoplastic material is a reinforcing element which has a shape complementary to the cylindrical bore (5; 5').

7. The assembly method as claimed in the preceding claim, in which a cut in the assembly bond (6, 20) protruding from the visible face (12a) of the first part (10a) is made after removal of the first heating panel (3a, 3b) and before installation of the consolidation tooling (30a, 30b).

8. The assembly method according to any one of claims 6 or 7, wherein in the case where the assembly link (6, 6') is a reinforcing element, this element is driven following the piercing tip (1) which emerges from the thermoplastic material (10a, 10b) moving in the direction of its introduction.

9. The assembly method as claimed in claim 5, in which the assembly bond of thermoplastic material is the formation of a stitch (14, 15) between two threads by the passage of a sewing needle (13) through the cylindrical bore (5).

10. The assembly method as claimed in any one of claims 5 to 9, in which provision is made for automating the simultaneous assembly steps of several parts to be assembled.

11. The assembly method as claimed in claim 1, in which a workpiece drilling grid (2a, 2b) is used for simultaneous drilling of the workpieces (2a, 2b) by the drilling tips (1).

12. The assembly method as claimed in any one of claims 5 to 11, wherein a countersunk head (40) is generated from the corresponding geometry of the drill tip, the countersunk head (40) being extended by the bore (5').

13. The assembly process as claimed in any one of claims 5 to 12, in which a bonding recess (41) is formed in the second heating panel (30'b) positioned against the visible face (11b) of the second part (2b), in order to anchor the reinforcing element (6) to this face (11b), forming a bead (62) by compression and heating.

14. High-strength equipment comprising an architecture with a stiffened structure and a pressurized panel made of composite material, **characterized in that** structures and panels (2a, 2b) are assembled in accordance with the assembly of parts according to any one of claims 1 to 4, by implementing the process according to any one of claims 5 to 13.
